**Europäisches Patentamt**

**European Patent Office**

**Office européen des brevets**

(19)

(11) Publication number: **0 168 673**
**B1**

(12)

# EUROPEAN PATENT SPECIFICATION

(45) Date of publication of patent specification: **20.01.88**

(51) Int. Cl.⁴: **B 23 K 26/12**

(21) Application number: **85107699.2**

(22) Date of filing: **21.06.85**

(54) Laser beam welding apparatus.

(30) Priority: **10.07.84 US 629529**

(43) Date of publication of application:
**22.01.86 Bulletin 86/04**

(45) Publication of the grant of the patent:
**20.01.88 Bulletin 88/03**

(84) Designated Contracting States:
**BE DE FR GB IT SE**

(56) References cited:
**EP-A-0 102 835**
**DE-B-2 919 813**
**GB-A-2 131 718**

**PATENT ABSTRACTS OF JAPAN, vol. 5, no. 93**
**(M-74)765r, 17th June 1981; & JP - A - 56 39131**
**(HITACHI SEISAKUSHO) 14-04-1981**

(73) Proprietor: **WESTINGHOUSE ELECTRIC
CORPORATION**
**Westinghouse Building Gateway Center**
**Pittsburgh Pennsylvania 15222 (US)**

(72) Inventor: **Rieben, Stuart Louis**
**1282 Pinewood Drive**
**Pittsburgh, Pa., 15243 (US)**

(74) Representative: **Patentanwälte Dipl.-Ing. R.
Holzer Dipl.-Ing. (FH) W. Gallo
Philippine-Welser-Strasse 14
D-8900 Augsburg (DE)**

Courier Press, Leamington Spa, England.

## Description

The invention relates generally to apparatus for machining work pieces by means of a beam capable of generating extraneous particulate matter. More particularly, the invention relates to means for collecting and removing the particulate matter generated as an undesirable by-product during such machining operations.

Typically, machining operations using a beam, such as a laser beam (e.g. EP—A2—102 835) are carried out in a protective gas atmosphere maintained in a chamber containing the work piece being machined. The protective atmosphere in the machining chamber usually is maintained throughout a machining operation by continuously introducing a non-reactive or inert gas, such as argon, into the chamber at its bottom, and enabling gas to escape from the chamber at its top as new gas is being introduced, the gas from the machining chamber being allowed to find its way into a plenum from which it is exhausted. The inert gas streaming through and from the machining chamber will carry with it particulate matter generated in the chamber, and even though particulate matter is generated only at a relatively low rate, much of it becoming entrained in the stream of gas will settle out at various points along the gas flow path and gradually accumulate to form deposits. Apart from being scattered throughout various locations within the equipment not all of which are easily accessible for cleaning, these particulate accumulations also represent a substantial hazard if the particulate matter generated is pyrophoric, as, for instance, are the particles or fines produced during laser welding of zircaloy grids for nuclear fuel assemblies.

It is the principle object of the invention to alleviate this problem, and the invention accordingly resides in an apparatus for machining work pieces by means of a beam capable of generating extraneous particulate matter, said apparatus including a machining chamber for receiving the work pieces to be machined, and means for introducing a non-reactive gas into the machining chamber so as to maintain therein a suitable machining environment throughout each machining operation, said machining chamber having an opening which permits passage of non-reactive gas from the chamber, characterized in that said machining chamber has associated therewith particle collecting and removing means including a manifold having inlet means, and has further associated therewith sealing means operable in an inactive state for permitting non-reactive gas exiting the machining chamber through said opening to freely escape, and operable to an active state for sealing said opening of the machining chamber into fluid flow communication with said inlet means of the manifold so as to constrain non-reactive gas and particulate matter entrained therein to flow from the machining chamber solely into said manifold.

This arrangement consigns the exiting gas to a well defined path including means for collecting particulate matter entrained in the gas and for permitting easy removal thereof. However, it does so only upon operation of the sealing means to the active state thereof. Prior to activation of the sealing means, the latter will allow gas exiting through the opening of the machining chamber freely to overflow, as is desirable for purging the chamber of air and moisture during the interval between loading a work piece into the chamber and machining it, when no particulate matter is produced. Moreover, the sealing means, while inactive, will not interfere with the movements of the machining chamber between its loading and operating positions.

Preferably, the manifold consists of separate sections separably joined together and, when separated from one another, affording access to the interior of the manifold for easy cleaning; and the particle collecting and removing means includes a particle removal system connected to the manifold for receiving therefrom the non-reactive gas carrying particulate matter, said particle removal system including means for separating the particulate matter from the non-reactive gas. The particle removal system is connected to said outlet means of the manifold through separable coupling means, and the manifold is removable and has associated therewith latching means operable to locking and releasing positions for locking the manifold in its operative position and for releasing it for removal, respectively. The means for coupling the particle removal system to, and for decoupling it from, the manifold, and the latching means associated with the manifold preferably being ganged for simultaneous operation.

In the preferred embodiment to be described in detail hereinafter, the sealing means comprises a sealing plate overlying the machining chamber and said opening thereof in closely spaced relationship therewith, a sealing member supported from the machining chamber and extending around said opening thereof in underlying relation with respect to said sealing plate, and seal activating means operable to urge said sealing member into sealing engagement with the underside of said sealing plate. The manifold is disposed in an opening formed in the sealing plate and adapted to have the machining beam directed therethrough, the manifold being of generally annular configuration and defining an opening which extends through the manifold substantially in coaxial alignment with said opening in the sealing plate.

The preferred embodiment of the invention will now be described, by way of example only, with reference to the accompanying drawings, in which:

Figure 1 is a perspective view of a nuclear fuel assembly;

Figures 2A, 2B and 2C are, respectively, a perspective view, a plan view, and a sectioned side view of a grid forming part of the fuel assembly shown in Figure 1;

Figure 3 is a perspective, schematic representation of a laser machining system for directing a laser beam from a single laser source alternately upon two work pieces, such as grids of the kind shown in Figures 2A, 2B and 2C;

Figure 4 is a perspective view of a laser welding apparatus incorporating the system of Figure 3 and including a particulate collection and removal system embodying the invention;

Figures 5 and 6 are, respectively, plan and side views of the particulate collection and removal system;

Figure 7 is a plan view of a manifold latch assembly and of a gas collection manifold forming part of the particulate collection and removal system;

Figure 8 is a side, sectioned view of the manifold latch assembly as taken along line 8—8 of Figure 7;

Figure 9 is a plan, sectioned view of the manifold latch assembly and of the gas collection manifold as taken along line 9—9 of Figure 8;

Figure 10 is a plan, sectioned view of the gas collection manifold as taken along line 10—10 of Figure 8;

Figure 11 is a side, partially sectioned view of the manifold latch assembly as taken along line 11—11 of Figure 7;

Figure 12 is a partially sectioned view of the manifold latch assembly as taken along line 12—12 of Figure 7;

Figure 13 is a side, partially sectioned view of a welding chamber of the laser welding apparatus as taken along line 13—13 of Figure 4; and

Figures 14 and 15 are sectioned side views of the chamber sealing assembly, showing a seal in sealing relationship and non-sealing relationship respectively, with a sealing plate.

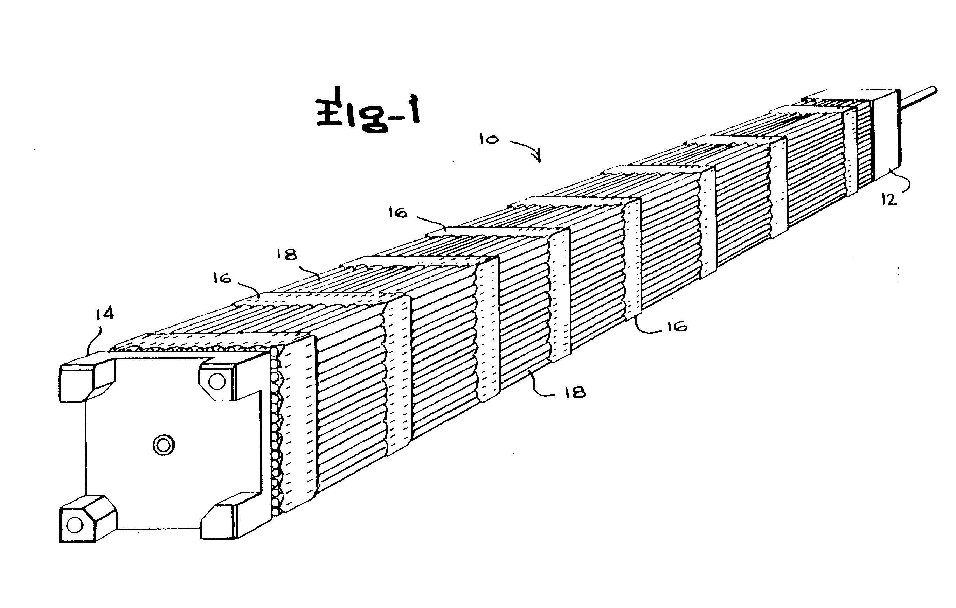

Referring now first to Figure 1 of the drawings, the nuclear fuel assembly illustrated therein and generally designated with reference numeral 10 is a self-contained unit comprising a top nozzle 12, a bottom nozzle 14, a matrix of nuclear fuel rods 18 arrayed in rows and columns between the nozzles 12 and 14, fuel rod grids 16 laterally supporting the fuel rods in parallel spaced relationship with respect to each other, and control rods (not shown) at selected positions within the array of nuclear fuel rods 18. The nozzles 12 and 14, the fuel rod grids 16, and control rods guide thimbles (not shown) form a skeletal frame supporting the fuel rods 18 and the control rods.

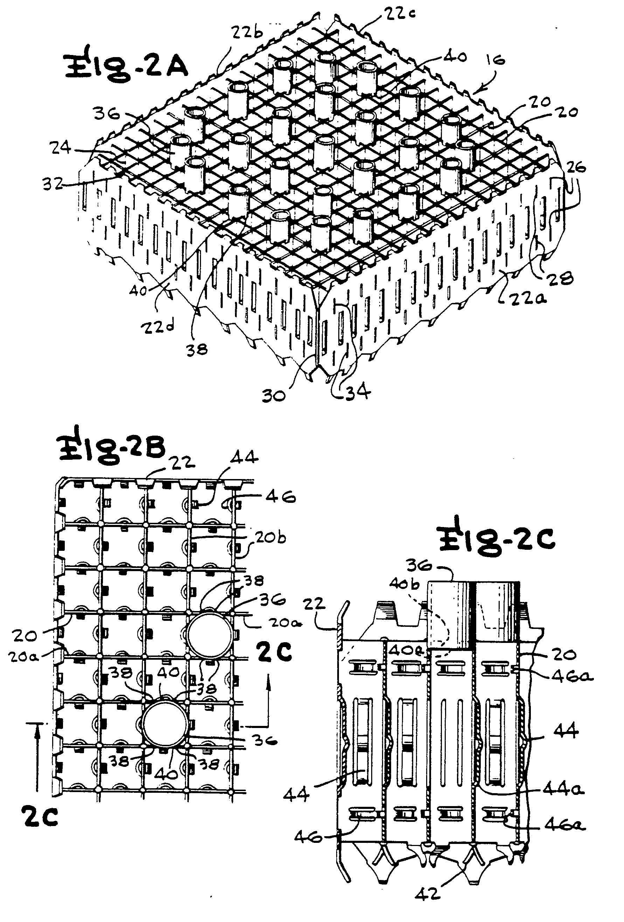

The precision laser welding apparatus embodying the invention is particularly suitable for use in the manufacture of fuel rod grids such as the grid 16 shown in Figures 2A to 2C. The fuel rod grid 16 is of an approximately square configuration, as viewed in plan, its periphery being formed by four outer grid straps 22 joined at their ends by corner seam welds 30. A plurality of inner grid straps 20 forms an egg-crate-like structure defining cells for the fuel rods 18 and control-rod guide thimbles to extend therethrough. The inner grid straps 20 intersecting each other have complementary slots formed at their points of intersection, as at 24, enabling the intersecting inner grid straps 20 to intermesh, an intersect weld 32 being formed at each point of intersection 24 to join the inner grid straps to one another. Each of the inner grid straps 20 has at each end thereof a pair of tabs 26 which are received in corresponding slots 28 formed in the outer grid straps 22, and are secured to the latter by means of slot and tab welds formed along the top and bottom rows of tabs 26 and slots 28. Sleeves 36 for control-rod guide thimbles (not shown) are disposed in one face of the grid 16, each sleeve 36 being seated in recesses 38 formed in edge portions of the inner grid straps 20 and being secured to the straps by notch seam welds 40. The laser welding apparatus embodying the invention is adapted to perform a series of controlled welding operations for making the welds 30, 32, 34 and 40.

As seen from 2B and 2C, the inner grid straps 20 have thereon a plurality of resilient fingers 44 and dimples 46 which protrude into the respective grid cells so as to provide lateral support for the nuclear fuel rods 18 extending therethrough, as known in the art.

The particular manner in which the various welding operations are sequenced forms no part of the present invention and, hence, will not be further described herein. Suffice it to say that, after each such welding operation, the fuel rod grid being welded is repositioned and/or the focal point of the laser beam is changed in accordance with the particular type of weld to be formed next.

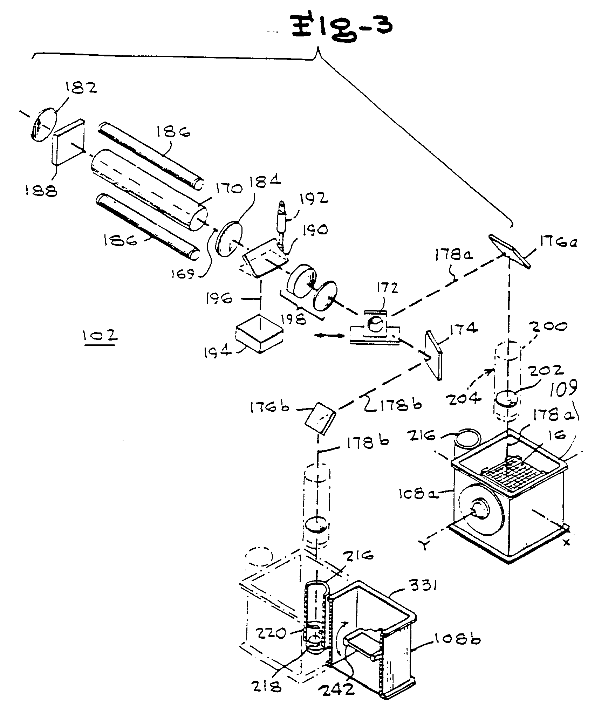

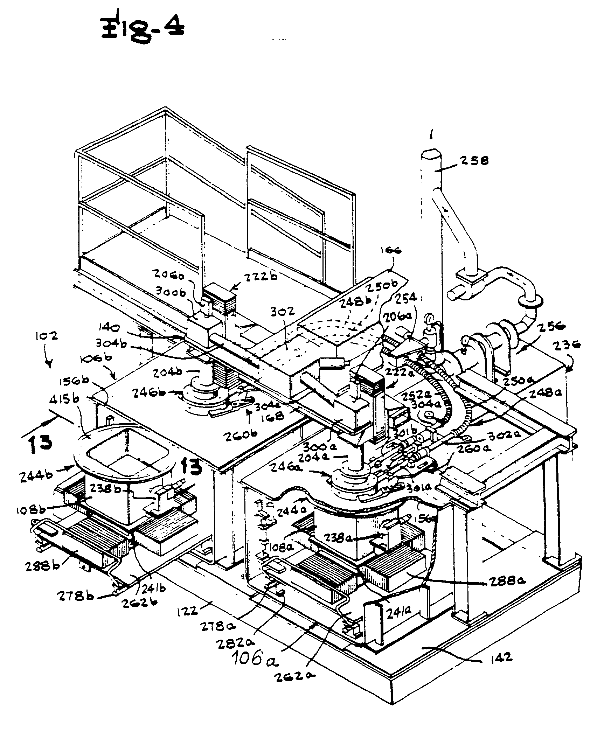

The welding apparaus to which the invention is shown applied herein may utilize a laser system such as schematically illustrated in Figure 3 and generally designated with reference numeral 102. The laser system 102 emits a laser beam 169 of controlled energy, successively and precisely positions each work piece, i.e. the grid 16, and controls the supply of a suitable inert gas, e.g., argon, into a pair of welding chambers 108a and 108b as laser welding is carried out therein. Each work piece is successively moved to its various weld positions by means of a positioning module 106a or 106b (Figure 4.) having associated therewith one of the welding chambers 108a and 108b, for receiving the work piece and establishing an environment, i.e. an inert gas atmosphere, in which laser welding can be carried out.

The laser system 102 may be of the kind as manufactured by Raytheon under their model designation number SS500. It includes a laser rod 170 in the form of a Nd:YAG crystal laser, and a pair of linear krypton flash lamps 186 disposed in a high-efficiency, laser head. The laser head includes a total reflecting mirror 182 and a partial reflecting mirror 184 disposed at opposite ends of the laser rod 170. An inner cavity shutter 188 disposed between the laser rod 170 and the total reflecting mirror 182 is adapted to be selectively controlled so as to release a selected number of lasing pulses depending upon the energy required to effect laser welding. The laser head is modularly constructed to permit all optic elements thereof, including the laser rod 170, the excitation lamps 186, and the mirrors 182 and 184 to be easily and independently replaced. The flash lamps 186 are water cooled over their entire length, including their end connectors. Lamp triggering provides for parallel pulsing of the excitation lamps 186 by energizing the cavity.

A dump shutter 190 is movable by means of a suitable actuating mechanism 192 between a first position (shown in solid lines; for directing the laser beam 169 along a diverted path 196 and into a beam absorber 194 during peroids when work pieces are being changed within welding chambers 108, and a second position shown in broken lines permitting the beam 169 to be focused by a beam expander lens assembly 198 onto beam directing means comprising a movable beam switching mirror 172 and a stationary mirror 174. When the switching mirror 172 is disposed to intercept the laser beam 169, the beam is diverted along path 178a onto the mirror 176a and downward vertically into the laser focusing lens assembly 204 which focuses the laser beam 169 along path 178a onto the work pieces, i.e. the fuel rod grid 16, within the chamber 108a. The laser focusing lens assembly 204, including a focusing lens 202 and a lens carrier tube 200, is rectilinearly positionable by a Z-axis laser assembly 222 (Figure 4) associated therewith. When the switching mirror 172 is moved, e.g. by means of a linear electric motor (not shown), from its laser intercepting position to a non-intercepting position, the laser beam 169 strikes the stationary mirror 174 and is reflected thereby along path 178b onto a mirror 176b which directs the beam towards the welding chamber 108b.

As seen from Figure 4, the laser system 102 is mounted on a main frame 122 in an aligned position with respect to the positioning modules 106a and 106b which, once aligned with the laser system 102, are fixed in position with respect to the main frame 122 and the laser system 102 thereon. The main frame 122 consists of a top plate 142 and a bottom plate (not shown) each welded to a frame of square tubing. The top plate 142 is machined flat to provide a reference surface for the system components mounted thereon.

As shown in Figure 4, each of the positioning modules 106a and 106b includes a slide table 262 mounted, for rectilinear movement, by means of a pair of bearing rods 278 affixed to its lower surface and slidable in pillow blocks 282, the arrangement being such that the slide table 262 and the welding chamber 108 thereon are slideable into and from the associated positioning module 106. Each welding chamber 108 is mounted on an X—Y platform 241, and each X—Y plateform 241 in turn is mounted on an X—Y positioning system 288 for moving the welding chamber 108 incrementally along X and Y axes, preferably under the control of a computer (not shown). Each of the positioning modules 106 further includes a top plate 156 disposed in closely spaced relationship with the associated welding chamber 108 and serving as a sealing plate, as explained later herein.

A kinematic support 140 is provided for positioning the laser system 102 with respect to the reference surface of the main frame 122 and, more specifically, with respect to the work pieces in the welding chambers 108a and 108b. A laser head housing 166 containing the laser rod 170 (Figure 3) is mounted on an optical tooling plate 168 machined to very close tolerances for flatness, and which tooling plate 168 has mounted thereon also the movable beam switching mirror 172 (Figure 3) together with its actuator (not shown), and the stationary beam diverters in the form of mirrors 174, 176a and 176b.

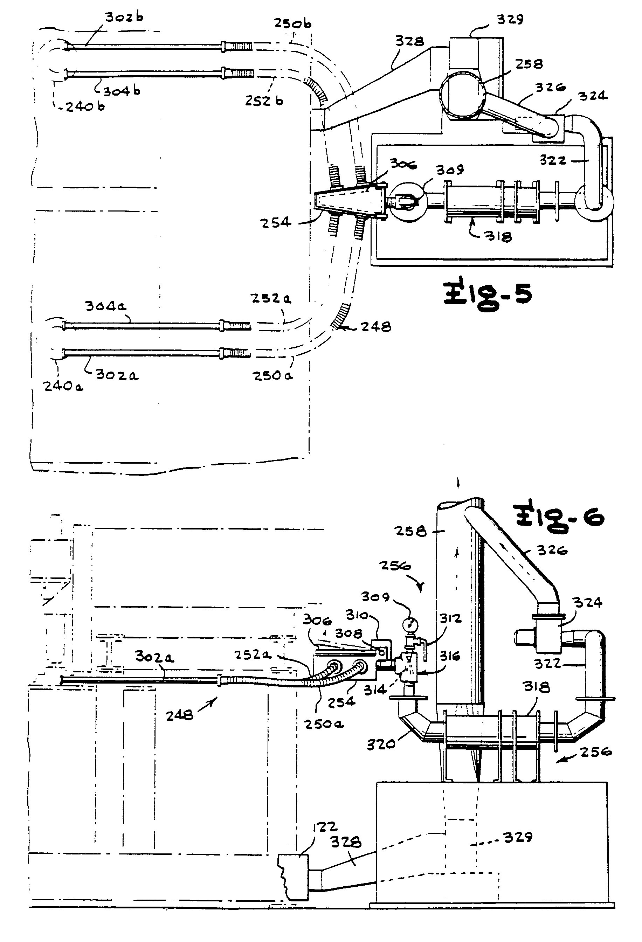

As described above, each welding chamber 108 may be withdrawn from its associated positioning module 106 to permit the fuel rod grid 16 that has been welded to be removed therefrom and to be replaced with a new grid 16 to be welded. Thus, the chamber 108b is shown in Figures 3 and 4 in a position enabling a new fuel rod grid 16 to be readily placed therein and mounted on a rotatable fixture 242 (Figure 3), whereupon the slide 262 together with the welding chamber 108 thereon is moved again into the positioning module 106. As seen from Figure 4, each welding chamber 108 has an upper-most flange which is disposed in relatively closely spaced relationship with respect to the sealing plate 156. When the laser welding system is in operation, an inert gas, e.g. argon, is introduced into the welding chamber 108 through ports (not shown) in the rotatable fixture 242 and through a diffuser plate (not shown) disposed in the bottom of the welding chamber 108. After reinsertion of the welding chamber 108 into its positioning module 106, the rate of flow of argon into the welding chamber 108 is increased so as to purge air and moisture from the welding chamber 108 through the narrow space between the top flange of the welding chamber and the lower surface of the sealing plate 156. Argon flowing through said narrow space falls through large openings (not shown) in the main frame 122 serving as an exhaust plenum as well as a support base. As shown in Figures 5 and 6, a duct blower 329 produces a negative pressure within the plenum defined by the main frame 122, whereby the argon gas is exhausted from the plenum, through a transition duct 328 and an exhaust conduit 258, to the exterior of the building enclosing the laser welding apparatus.

Argon will continue to flow at a relatively high rate until the welding chamber 108 is purged of the air and moisture aspirated during the grid loading. A moisture sensor and an oxygen detector (not shown) are incorporated in the welding chamber 108 to continuously monitor the chamber atmosphere. When preset moisture and oxygen levels are reached, laser welding can commence, with argon continuing to be introduced into the welding chamber 108 during the welding process, but at a reduced rate.

As explained initially herein, laser welding results in particulate matter being removed from the work pieces and becoming entrained in the inert gas stream from which it tends to settle out to form deposits. With reference to Figures 4 to 12, a preferred embodiment of the particle collection and removal system provided in accordance with the invention will now be described.

As seen from Figure 4, the particle collection system 236 includes a pair of pneumatically actuated chamber sealing assemblies 244a and 244b each mounted about the opening of one of the welding chambers 108 by means of a seal support assembly 415a or 415b, respectively. As will be explained below, each chamber sealing assembly 244 serves to seal the associated welding chamber 108 into fluid flow communication with the particle collection and removal system during each welding operation.

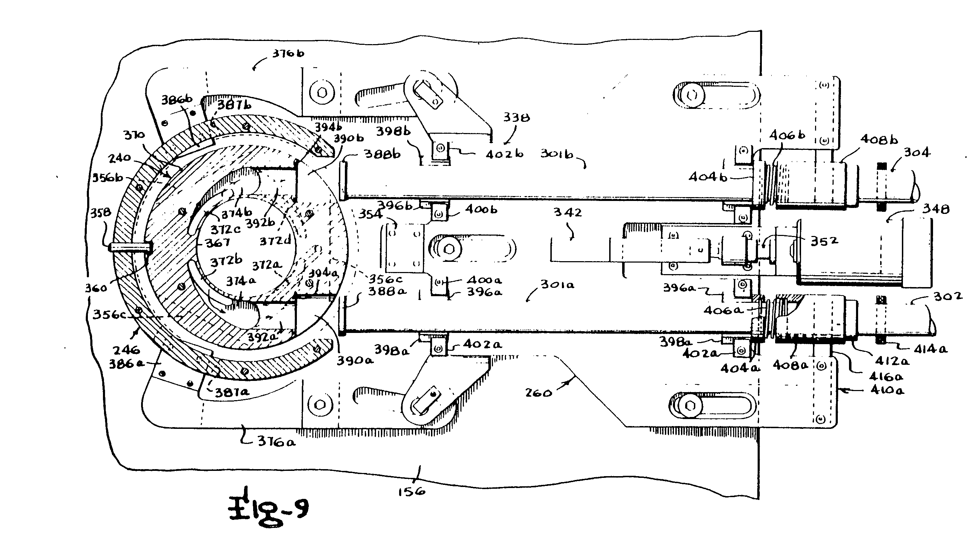

After actuation of the chamber sealing assembly 244 to seal the welding chamber 108 to the particle collecting system 236, argon is introduced into the chamber to maintain therein the proper machining atmosphere, and to collect and remove particles, such as zircaloy fines, produced during the welding process. The argon together with the zircaloy fines entrained therein exits from the respective welding chamber through its top opening and enters the associated gas collection manifold 240a or 240b (Figures 8 and 9) through which it passed into an exhaust system 248 comprising sets of tubes 302, 304 and 250, 252 connected to a manifold 254 which is coupled to a particle removal system 256 for receiving the argon with the zircaloy fines and for discharging them into a waste system. As shown in Figures 5 and 6, the particle removal system 256 is coupled with an exhaust conduit 258 through which the argon is discharged into the atmosphere outside the building containing the laser welding system. Associated with the welding chambers 108a and 108b (see Figure 4) are lens seal housings 246a and 246b, which guide laser focusing lens assemblies 204a and 204b and form enclosures about the respective gas collection manifolds 240a and 240b. Each of the gas collection manifolds 240a and 240b has associated therewith a manifold latch assembly 260a or 260b for securing the gas collection manifold 240a or 240b with respect to the sealing plate 156a or 156b and for coupling the associated set of exhaust tubes 302 and 304 to the gas collection manifold 240a or 240b, respectively.

As indicated above, the exhaust system 248 serves to remove the inert gas with the zircaloy fines entrained therein from the gas collection manifolds 240a and 240b which communicate with the welding chambers 108a and 108b, respectively, and each of which is coupled to the manifold 254 through two rigid exhaust tubes 302, 304 and two flexible exhaust tubes 250, 252. The rigid exhaust tubes 302 and 304 are adapted to be decoupled from their associated gas collection manifold 240 to permit the latter to be removed an cleaned of any zircaloy fines, the flexible exhaust tubes 250 and 252 enabling the rigid tubes 302 and 304 to be rectilinearly moved for this purpose.

The manifold 254 is coupled with the particle removal system 256 so as to permit the zircaloy fines or particles to be removed from the inert gas and discharged into a sewer or waste removal system. The manifold 254 includes a flapper 306 which is pivotably movable about a hinge 308 from a closed position, as shown in full lines in Figure 6, to an open position, as shown in dotted lines, and which flapper 306 is adapted to be driven by a suitable drive mechanism 310.

Argon carrying zircaloy fines enters the particle removal system 256 through a wet scrubber 316 which, as shown in Figure 6, includes a venturi 314 connected to a water inlet 312 through which to receive water to be atomized into a spray for "washing" the argon. An inlet conduit 320 directs the argon into a water web filter assembly 318 comprising a series of fine mesh filters subjected to a continuous steam of water which washes away the zircaloy fines. The wet scrubber 316 and the water web filter 318 may be the kind manufactured by Heat Systems, Ultrasonics, Inc., Farmingdale, New York, under the respective model numbers HSM 2RCMV and MYSTAIRE. The argon from which the zircaloy fines have been removed is drawn by an exhaust blower 324 through connecting conduits 322 and 326 to be discharged through the exhaust conduit 258.

At times when the argon exiting the welding chambers is not constrained to enter the associated manifolds 240, it will, since it is heavier than air, descend and fall through large openings (not shown) in the main frame 122 (Figure 4) and into an exhaust plenum defined by the frame. From the plenum, the argon will be sucked by a duct blower 329 into a duct 328 connected to the exhaust conduit 258.

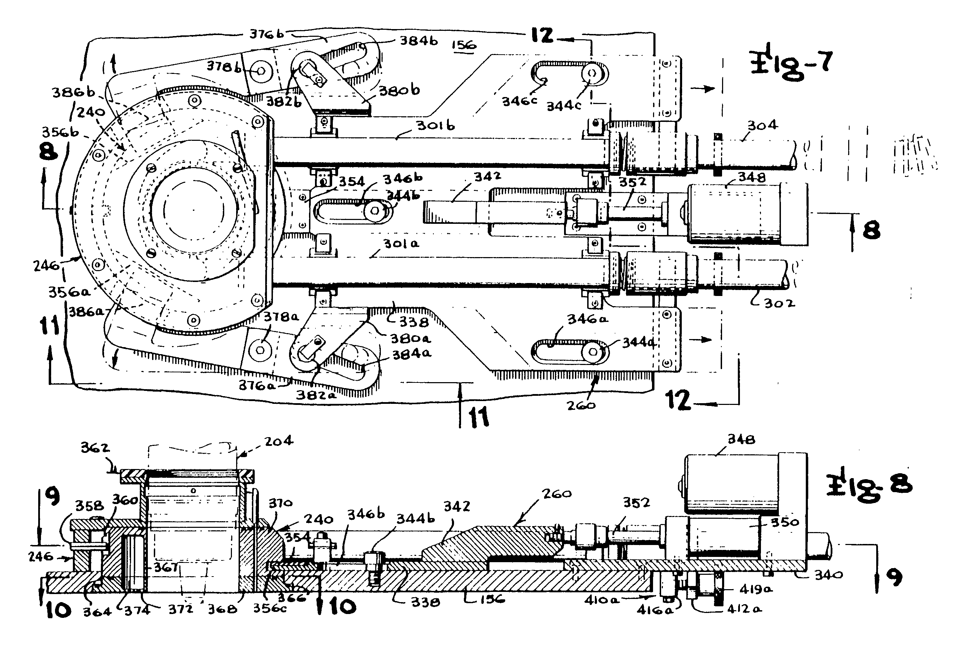

Referring now to Figures 7, 8 and 9, the structure and operation of one of the manifold latch assemblies 160a and 260b for the gas collection manifolds 240 and the coupling tubes 302 and 304 will now be explained as representative of both of them. It will be understood that as zircaloy fines are removed from the laser welding system, some of them will be trapped within the gas collection manifold 240, thus necessitating periodic cleaning thereof. As shown particularly in Figure 8, the gas collection manifold 240 is positioned within the lens seal housing 246 which also provides an opening for sealingly receiving the laser focusing lens assembly 204. The gas collection manifold 240 is positioned in part by means of a slot key 358 fixedly disposed within the lens seal housing 246 and received in a guide slot 360 of the gas collection manifold 240 so as to properly orientate the latter within a manifold opening 364 extending through the sealing plate 156. Likewise as seen from Figure 8, the gas collection manifold 240 comprises a lower manifold section 368 and an upper manifold section 370 which together form the gas collection manifold 240. The manifold opening 364 in the plate 156 has defined therein a recess 366 cooperating with a flange on the lower manifold section 368 to align a central opening 367 through the manifold 240 with the laser focusing lens assembly 204.

The gas collection manifold 240 is releasably locked in place on the sealing plate 156 and is separably coupled to the rigid exhaust pipes 302 and 304 by the manifold latch assembly 260 which comprises a pair of pivotally supported latch arms 376a and 376b, and latch mounting plate 338. The latch mounting plate 338 is shown in a first or latching position in Figure 7 and in a second or unlatching position in Figure 9, and it is movable between these two positions by means of a drive motor 348 mechanically coupled to the latch mounting plate 338 through a driving screw mechanism 350 which provides a mechanical advantage in translating the rotational output of the drive motor 348 into a rectilinear movement of a piston 352 connected to a block 342 on the latch mounting plate 338. As best seen from Figure 7, the latch mounting plate 338 is guided in its movements between said first and second positions by means of guide pins 344a, 344b and 344c secured to the seal plate 156 and engaged in elongate guide slots 346a, 346b and 346c, respectively, formed in the latch mounting plate 338.

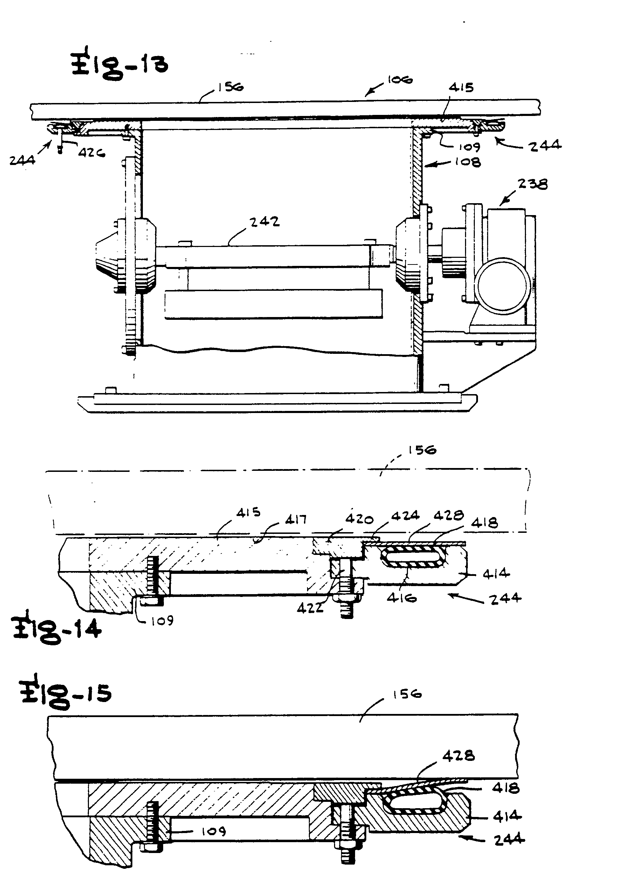

The two latch arms 376a and 376b are pivotally supported on the sealing plate 156 by means of pivot pins 378a and 378b, respectively, each pivotally supporting its associated latch arm at a point spaced from both ends thereof. Each of the latch arms 376a and 376b has, adjacent one end thereof, an in-turned locking finger 386a or 386b which extends through an opening 386a or 386b in the lens seal housing 246 and is engageable with a retaining slot 356a or 356b in the gas collection manifold 340 (see also Figures 4 and 9), and each latch arm, adjacent its opposite end, is pivotally connected to the latch mounting plate 338 in a manner enabling movement of the latter in opposite directions to move the locking finger 386 of the latch arm into and from, respectively, locking engagement with the retaining slot 356a or 356b in the gas collection manifold 340. The pivotal connection between each latch arm 376 and the latch mounting plate 338 is formed by a roller 382a or 382b rotatably supported by and between two arms 381 (see Figure 11) of a support bracket 380a or 380b on the latch mounting plate 338, and an elongate cam slot 384a or 384b which is formed in an end portion of the latch arm 376 extending between the two bracket arms 381, and which cam slot cooperates with the roller 382.

Thus, when it is desired to latch the gas collection manifold 240 to the sealing plate 156, the drive motor 348 is electrically energized so as to drive the latch mounting plate 338 to the left, as viewed in Figures 7, 8 and 9, whereby both latch arms 376 are driven pincer-like from their position shown in Figure 9 to their full-line position shown in Figure 7, thus causing their locking fingers 386a and 386b to be engaged with the retaining slots 356a and 356b in the gas collection manifold 240 so as to lock the latter to the sealing plate 156. In addition, this movement of the latch supporting plate 338 causes a wear pad 354 disposed on its edge directed toward the gas collection manifold 340 to engage a corresponding retaining slot 356c likewise formed in the manifold. When it is desired to unlatch or unlock the gas collection manifold 240 in order that it can be removed and cleaned, the drive motor 348 is energized to drive the latch mounting plate 338 in the opposite direction, i.e. from its position shown in Figure 7 to its position shown in Figure 9, whereby the retaining or locking fingers 386a, 386b and the wear pad 354 are withdrawn from the retaining slots 356a, 356b and 356c of the gas collection manifold 240.

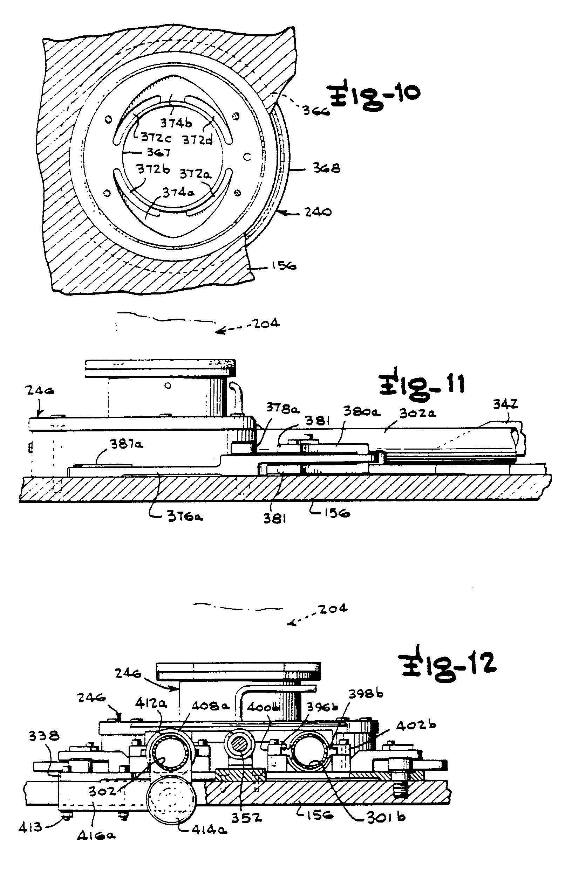

The gas collection manifold 240 is most clearly illustrated in Figures 8, 9 and 10. It is particularly designed not only to be readily removed from the sealing plate 156, but also to be readily disassembled and cleaned before being returned to the manifold opening 364 in the sealing plate 156. As mentioned hereinbefore, the gas collection manifold 240 has a bottom manifold section 368 (Figure 8) and a top manifold section 370. As seen from Figure 9, the bottom manifold section 368 has formed therein a plurality of entrance ports 372a, 372b, 372c and 372d, some of which, i.e. ports 372a and 372b, lead into and communicate with a first transition cavity 374a (see Figure 10), whilst the remaining entrance ports 372c and 372d lead into and communicate with a second transition cavity 374b. The entrance ports 372 and the transition cavities 374a and 374b are designed to minimize any decrease in the velocity of gas flow therethrough and thereby to minimize the amount of particulate matter settling out of the gas stream and collecting in the gas collection manifold 240. Thus, in order to maintain the gas flow velocity substantially constant, the entrance ports 372 and the transition cavities 374 are carefully configured to direct the gas entering through the ports 372 to and into a pair of exit ports 392a and 392b smoothly and without a significant increase in cross-sectional gas flow area, the transition cavities 374 being designed to gradually change the arcuate, relatively narrow flow configuration of the entrance ports 372 into the circular cross-sectional flow configuration of the exit ports 392, each of which, furthermore, fairs into the associated transition cavity 374a or 374b approximately at its mid-point so as to further facilitate the passage of gas from the entrance ports 372a-b or 372c-d into the exit port 392a or 392b, respectively.

As best shown in Figures 7 and 9, the rigid tubes 301a and 301b are mounted in a manner such as to permit limited axial relative motion thereof with respect to the latch mounting plate 338. At its inlet end, each tube 301a or 301b is provided with an annular sealing flange 388a or 388b which fits into a socket 390a or 390b formed in the gas collection manifold 240 in axial alignment with the associated exit port 392a or 392b, respectively, and containing an O-ring 394a or 394b. When the flanged end portions of the tubes 301a and 301b are fully inserted in the associated sockets 390, their sealing flanges 388a and 388b are in sealing contact with the respective O-rings 394a and 394b to prevent any leakage of gas.

As best seen from Figures 9 and 12, each of the tubes 301a and 301b is slidably supported on the latch mounting plate 338 by means of glide flanges 396a, 398a or 396b, 398b fixedly disposed on opposite sides of the respective tube 301 and at axially spaced locations thereon, and stationary guide blocks 400a, 402a or 400b, 402b secured to the latch mounting plate 338 and slideably supporting the respective glide flanges on the tube.

As best shown in Figure 9, the sliding tubes 301 are coupled to the rigid exhaust tubes 302 and 304 in a manner permitting the tubes 301a and 301b to slide and enabling biasing springs 406a and 406b to for maintain sealing pressure between the sealing flanges 388 of the respective tubes 301 and the O-rings 394 in the associated manifold sockets 390 when engaged therewith. More specifically, each of the sliding tubes 301 has thereon a spring retaining flange 404, and each of the exhaust tubes 302 and 304 has thereon a collar 408, the associated one of the biasing springs 406, which are spiral springs, being interposed under compression between the flange 404 and the collar 408. The extent of residual axial movement of the tubes 301a and 301b still taking place after engagement of their sealing flanges 388 with the O-rings 394 can be seen by comparing Figures 7 and 9 with regard to the spacing between the respective flange 404 on each tube 301 and the adjacent guide blocks 400, 402.

It will be seen from Figures 8, 9 and 12 that each of the two collars 408a and 408b has associated therewith an adjusting mechanism 410a and 410b, respectively, which comprises a support member 416 secured by means of suitable fasteners 413 (Figure 12) to the latch mounting plate 338, a coupling member 412 affixed to the associated exhaust tube 302 or 304, and an adjusting knob 414 threadedly engaged with the support member 416, the arrangement being such that rotation of the knob 414 will move the coupling member 412 and thereby adjust the position of the collar 408 to correspondingly change the sealing force supplied by the associated spring 406. Such adjustments may be made as desired or as occasionally necessary in order to compensate for changes in the extent of residual movement of the respective sliding tube 301 following initial engagement thereof with the O-ring 394 in the associated manifold socket 390.

Referring now to Figures 13, 14 and 15, one of the chamber sealing assemblies 244a and 244b (Figure 4) will now be described as representative of both. Basically, each sealing assembly 244 comprises a generally annular sealing element 428 which is supported from the top flange 109 of the associated welding chamber 108 and extends around the open top of the latter directly underneath the sealing plate 156, and seal actuating means 418 for forcing the sealing element 428 into sealing engagement with the underside of the sealing plate 156. More particularly, the sealing element 428 is a flexible ring made of a suitable material, such as glass-filled Teflon, and the actuating means 418 comprises an annular, inflatable tube of a suitable material, such as neoprene, which is supported directly beneath the sealing ring 428 so as, when inflated, e.g. through a nipple 426 (Figure 13), to force the sealing ring 418 into sealing engagement with the lower surface of the sealing plate 156, as shown in Figure 15. Support for the inflatable tube 418 is provided by a backing ring 414 having, in its upper side, an annular recess 416 in which the inflatable tube 418 is seated. The backing ring 414 and the sealing ring 428 are fastened to a support ring 415 by means of an annular retainer 420 and bolts 422 clamping an inner portion of the sealing ring 428 between the backing ring 414 and a flange 424 of the retainer 420, and clamping an inner flange portion of the backing ring between the retainer 420 and an outer flange portion of the support ring 425, the latter in turn being fastened, such as bolted, to the upper flange 109 of the welding chamber. In order to minimize friction and drag opposing the positioning mechanism 288 (Figure 4) in moving the welding chamber 108 from one weld position to another, the sealing plate 156 preferably has a polished lower surface, such as a polished chrome surface, and the seal actuating tube 418 is inflated with a pressure, such as 0.15 to 0.20 atmosphere, causing the sealing ring 428 to be held against the polished surface of the sealing plate 156 with but a modest force sufficient, of course, to provide proper sealing engagement between the sealing ring 428 and sealing plate 156. As shown in Figure 14, a narrow space is left between an upper surface 417 of the annular support member 415 and the lower surface of the sealing plate 156 in order to permit easy withdrawal of the welding chamber 108 to its loading position, as shown in Figure 4 with regard to chamber 108b.

Operation of the laser welding apparatus 102 involves essentially three successive cycles, namely, loading, purging, and welding. After welding of a fuel rod grid 16 is completed, the slide 262 together with the welding chamber 108 thereon is withdrawn from its positioning module 106 to the loading position in which the welding fuel grid can be readily removed from the chamber and replaced with a new one still to be welded. During this unloading and reloading cycle, zircaloy fines that may have been deposited within the gas collection manifold 240 may be removed by causing the drive mechanism 310 (Figure 6) to close the flapper 306. With the blower 324 operating, this will produce within the manifold 254 sufficient negative pressure to draw air through the gas manifold 240, the exhaust tubes 302 and 304, the flexible tubes 250 and 252 and the manifold 254. The air thus introduced will rapidly oxidize the zircaloy fines throughout the gas exhaust system 248, thereby reducing the chance that deposits of the zircaloy fines may accumulate and then burn or explode.

After the next fuel rod grid to be welded has been loaded into the welding chamber 108 and any accumulated zircaloy fines have been removed, the slide 262 together with the loaded welding chamber 108 thereon is returned into its positioning module 106, as illustrated in Figure 4.

Now, the laser welding apparatus 102 is operated in its purging cycle to remove air and moisture from the welding chamber 108. The residual air within the welding chamber 108 which might otherwise contaminate welds on the fuel rod grid is purged by introducing an inert gas, e.g., argon, into the welding chamber 108, for instance through conduits (not shown) in the rotatable fixture 242 (Figures 3, 13) and a diffuser (not shown) in the bottom of the welding chamber 108. Argon is thus introduced at a relatively high rate to purge the welding chamber 108 of entrained air and moisture until preset levels thereof are sensed. During the purging cycle, the sealing ring 428 is not actuated so that the argon overflowing from the chamber 108 may escape through the gap between the annular support member 415 and the sealing plate 156 (see Figure 14).

Next, the welding cycle is carried out to form the various slot and tab welds 34, corner seam welds 30, and intersect welds 32 on the grid disposed in the inert gas atmosphere within the welding chamber 108. During this welding cycle, the flapper 306 of the manifold 254 is in its open position (dotted line in Figure 6) so that the negative pressure established by the exhaust blower 324 in the manifold 254 and in the welding chamber 108 is relieved so as not to cause the argon to be withdrawn from the welding chamber 108 and air that could lead to weld contamination to be sucked in. As the inert gas continues to be introduced into the welding chamber 108, the pressure of the argon atmosphere within the chamber increases until inert gas is pushed out from the chamber at its top to flow through the gas collection manifold 240, the exhaust tubes 302 and 304, and the flexible tubes 250 and 252 into the manifold 254, thence to be drawn by the exhaust blower 324 into the particle collection system 236 which removes any zircaloy particles and discharges the argon through the exhaust conduit 258.

After a given number of welding cycles, enough zircaloy fines are likely to have become trapped within the gas collection manifold 240 to make it desirable for the latter to be cleaned. This is done, as indicated hereinbefore, by energizing the motor 348 (Figures 7, 8 and 9) so as to effect movement of the latch mounting plate 338 causing the sliding tubes 301 to be withdrawn from the sockets 390 in the gas collection manifold 240 and, simultaneously therewith, causing the latch arms 376 and the wear pad 354 to be moved out of latching engagement with the retaining slots 356 of the manifold 240. Now, the gas collection manifold 240 can be removed from the lens seal housing 246, and its two sections 368 and 370 can be separated to expose the ports 372, the transition cavities 374 and the exit conduits 392 for easy cleaning. Once the manifold has been cleaned of zircaloy fines, it is reassembled, reinserted into the manifold opening 364 of the sealing plate 156, and locked in place by means of the latch assembly 260.

## Claims

1. Apparatus for machining work pieces (16) by means of a beam (102) capable of generating extraneous particulate matter, said apparatus including a machining chamber (108) for receiving the work pieces (16) to be machined, and means for introducing a non-reactive gas into the machining chamber (108) so as to maintain therein a suitable machining environment throughout each machining operation, said machining chamber (108) having an opening which permits passage of non-reactive gas from the chamber (108), characterized in that said machining chamber (108) has associated therewith particle collecting and removing means (236, 256) including a manifold (240) having inlet means (372), and has further associated therewith sealing means (156, 418, 428) operable in an inactive state for permitting non-reactive gas exiting the machining chamber through said opening to freely escape, and operable to an active state for sealing said opening of the machining chamber (108) into fluid flow communication with said inlet means (372) of the manifold (240) so as to constrain non-reactive gas and particulate matter entrained therein to flow from the machining chamber solely into said manifold.

2. Apparatus according to claim 1, characterized in that said manifold (240) has formed therein outlet means (390, 392), and transition cavities (374) interconnecting said inlet means (372) with said outlet means (390, 392).

3. Apparatus according to claim 1 or 2, characterized in that said manifold (240) consists of separate sections (368, 370) separably joined together and, when separated from one another, affording access to the interior of the manifold for easy cleaning.

4. Apparatus according to claim 1, 2 or 3, characterized in that said particle collecting and removing means includes a particle removal system (256) connected to said outlet means (390, 392) of the manifold for receiving therefrom the non-reactive gas carrying particulate matter, said particle removal system (256) including means (316) for separating the particulate matter from the non-reactive gas.

5. Apparatus according to claim 4, characterized in that said means (316) for separating particulate matter from the non-reactive gas comprises a wet scrubber.

6. Apparatus according to claim 4 or 5, characterized in that said particle removal system (256) is connected to said outlet means (390, 392) of the manifold through separable coupling means (301).

7. Apparatus according to claim 6, characterized in that said outlet means (390, 392) includes socket means (390), and said separable coupling means (301) comprises conduit means movable into and from engagement with said socket means.

8. Apparatus according to any one of the preceding claims, characterized in that said manifold (240) is removable and has associated therewith latching means (376) operable to locking and releasing positions for locking the manifold in its operative position and for releasing it for removal, respectively.

9. Apparatus according to claim 6 or 7, characterized by a movable member (338) supporting said separable coupling means (301) and movable between a first position and a second position for coupling the particle removal system (256) to, and for decoupling it from, the outlet means (390, 392) of the manifold (240), said manifold being removable and having associated therewith latching means (376) operable to locking and releasing positions for locking the manifold in an operative position and for releasing it for removal, respectively, said movable member (338) and said latching means (376) being ganged in such manner that movement of the movable member (338) to said first and second positions thereof effects simultaneous movement of the latching means (376) to said locking and releasing positions, respectively.

10. Apparatus according to any one of the preceding claims, characterized in that said sealing means (156, 418, 428) comprises a sealing plate (156) overlying the machining chamber (108) and said opening thereof in closely spaced relationship therewith, a sealing member (428) supported from the machining chamber and extending around said opening thereof in underlying relation with respect to said sealing plate (156), and seal activating means (418) operable to urge said sealing member (428) into sealing engagement with the underside of said sealing plate (156).

11. Apparatus according to claim 10, characterized in that said machining chamber (108) is movable relative to said sealing plate (156) in a plane parallel to said underside thereof, said underside being polished.

12. Apparatus according to claim 10 or 11, characterized in that said seal activating means (418) is an inflatable tube supported directly beneath said sealing member (428) and adapted, when inflated, to force the latter into said sealing engagement.

13. Apparatus according to claim 10, 11 or 12, characterized in that said sealing plate (156) has formed therein an opening (364) adapted to have the machining beam directed therethrough, said manifold (240) being disposed in said opening of the sealing plate and of generally annular configuration so as to define an opening (367) which extends through the manifold substantially in coaxial alignment with the opening (364) in the sealing plate.

## Patentansprüche

1. Vorrichtung zur Bearbeitung von Werkstücken (16) mittels eines Strahls (102), durch welchen unerwünschtes teilchenförmiges Material erzeugt werden kann, wobei die Vorrichtung eine Bearbeitungskammer (108) zur Aufnahme der zu bearbeitenden Werkstücke (16) und Mittel zum Einleiten eines nichtreaktiven Gases in die Bearbeitungskammer (108) sowie zum Aufrechterhalten einer geeigneten Bearbeitungsumgebung während des Bearbeitungsvorgangs darin aufweist, und wobei die Bearbeitungskammer (108) eine Öffnung aufweist, welche den Durchtritt von nichtreaktivem Gas aus der Kammer (108) ermöglicht, dadurch gekennzeichnet, daß der Bearbeitungskammer (108) Teilchensammel- und Abführungsmittel (236, 256) zugeordnet sind, die eine Verzweigung (240) mit Einlaßmitteln (372) aufweisen, und außerdem Verschlußmittel (156, 418, 428) zugeordnet sind, die in einen unwirksamen Zustand bringbar sind, um durch die genannte Öffnung aus der Bearbeitungskammer austretendes nichtreaktives Gas frei entweichen zu lassen, und in einen wirksamen Zustand bringbar sind, um die genannte Öffnung der Bearbeitungskammer (108) in Strömungsverbindung mit den Einlaßmitteln (372) der Verzweigung (240) zu bringen, so daß nichtreaktives Gas und darin enthaltenes Teilchenmaterial aus der Bearbeitungskammer nur noch in die Verzweigung strömen kann.

2. Vorrichtung nach Anspruch 1, dadurch gekennzeichnet, daß in der Verzweigung (240) Auslaßmittel (390, 392) und die Einlaßmittel (372) mit den Auslaßmitteln (390, 392) verbindende Übergangshohlräume (374) gebildet sind.

3. Vorrichtung nach Anspruch 1 oder 2, dadurch gekennzeichnet, daß die Verzweigung (249) aus gesonderten Abschnitten (368, 370) besteht, die lösbar miteinander verbunden sind und, wenn sie voneinander getrennt sind, Zugang zum Inneren der Verzweigung zwecks leichter Reinigung ermöglichen.

4. Vorrichtung nach Anspruch 1, 2 oder 3, dadurch gekennzeichnet, daß die Teilchensammel- und -Abführungsmittel ein Teilchenabführsystem (256) aufweisen, das an die Auslaßmittel (390, 392) der Verzweigung angeschlossen ist, um das mit Teilchenmaterial beladene nichtreaktive Gas aufzunehmen, und daß das Teilchenabführsystem (256) Mittel (316) zum Abscheiden des Teilchenmaterials von dem nichtreaktiven Gas aufweist.

5. Vorrichtung nach Anspruch 4, dadurch gekennzeichnet, daß die Mittel (316) zum Abscheiden von Teilchenmaterial aus dem nichtreaktiven Gas einen Naßwäscher aufweisen.

6. Vorrichtung nach Anspruch 4 oder 5, dadurch gekennzeichnet, daß das Teilchenabführsystem (256) über trennbare Kupplungsmittel (301) mit den Auslaßmitteln (390, 392) der Verzweigung verbunden ist.

7. Vorrichtung nach Anspruch 6, dadurch gekennzeichnet, daß die Auslaßmittel (390, 392) Muffen (390) aufweisen, und daß die trennbaren Kupplungsmittel (301) beweglich in und außer Eingriff mit den Muffen bewegbare Leitungselemente aufweisen.

8. Vorrichtung nach einem der vorhergehenden Ansprüche, dadurch gekennzeichnet, daß die Verzweigung (240) herausnehmbar ist und daß ihr Verriegelungsmittel (376) zugeordnet sind, die in Verriegelungs- und Lösestellungen bringbar sind, um die Verzweigung in ihrer Arbeitsposition zu verriegeln bzw. zum Herausnehmen zu lösen.

9. Vorrichtung nach Anspruch 6 oder 7, gekennzeichnet durch ein bewegliches Bauteil (338), das die trennbaren Kupplungsmittel (301) trägt und zwischen einer ersten Stellung und einer zweiten Stellung bewegbar ist, um das Teilchenabführsystem (256) mit den Auslaßmitteln (390, 392) der Verzweigung (240) zu kuppeln bzw. davon zu trennen, wobei die Verzweigung herausnehmbar ist und ihr Verriegelungs- mittel (376) zugeordnet sind, die in Verriegelungs- und Lösestellungen bringbar sind, um die Verzweigung in ihrer Arbeitsstellung zu verriegeln bzw. sie zum Herausnehmen zu lösen, und wobei das bewegliche Bauteil (338) und die Verriegelungsmittel (376) in einer solchen Weise gekoppelt sind, daß eine Bewegung des beweglichen Bauteils (338) in dessen erste und zweite Stellungen eine gleichzeitige Bewegung der Verriegelungsmittel (376) in dessen Verriegelungs- bzw. Lösepositionen bewirkt.

10. Vorrichtung nach einem der vorhergehenden Ansprüche, dadurch gekennzeichnet, daß die Verschlußmittel (165, 418, 428) eine Verschlußplatte (156), die mit geringem Abstand über der Bearbeitungskammer (108) und deren Öffnung liegt, ein von der Bearbeitungskammer getragenes Verschlußteil (428), das unterhalb der Verschlußplatte (156) um die Öffnung herum verläuft, und Verschlußbetätigungsmittel (418) aufweisen, die betätigbar sind, um das Verschlußbauteil (428) in dichtende Anlage mit der Unterseite der Verschlußplatte (156) zu drängen.

11. Vorrichtung nach Anspruch 10, dadurch gekennzeichnet, daß die Bearbeitungskammer (108) relativ zur Verschlußplatte (156) in einer zu deren Unterseite parallelen Ebene verschiebbar ist, wobei die Plattenunterseite poliert ist.

12. Vorrichtung nach Anspruch 10 oder 11, dadurch gekennzeichnet, daß die Verschlußbetätigungsmittel (418) einen aufblasbaren Schlauch aufweisen, der direkt unter dem Verschlußbauteil (428) angeordnet ist und im aufgeblasenen Zustand das Verschlußbauteil in dichtende Anlage drängt.

13. Vorrichtung nach Anspruch 10, 11 oder 12, dadurch gekennzeichnet, daß die Verschlußplatte (156) eine darin gebildete Öffnung (364) aufweist, um den Bearbeitungsstrahl hindurchfallen zu lassen, und daß die Verzweigung (240) in dieser Öffnung der Verschlußplatte angeordnet ist und eine etwa ringförmige Gestalt hat, so daß sie ihrerseits eine Öffnung (367) bildet, die etwa koaxial zur Öffnung (364) der Verschlußplatte durch die Verzweigung hindurch verläuft.

**Revendications**

1. Appareil pour usiner des pièces mécaniques (16) au moyen d'un faisceau (102) susceptible de générer des particules de matière étrangère, ledit appareil comportant une chambre d'usinage (108) pour recevoir les pièces (16) à usiner, et des moyens pour introduire un gaz non réactif dans la chambre d'usinage (108) de façon à maintenir à l'intérieur de celle-ci un environnement d'usinage approprié tout au long de chaque opération d'usinage, ladite chambre d'usinage (108) ayant une ouverture qui permet le passage du gaz non réactif à partir de la chambre (108), caractérisé en ce qu'à ladite chambre d'usinage (108) sont associés des moyens (236, 256) de collecte et d'enlèvement des particules comportant un manifold (240) ayant des moyens d'entrée (372), et qu'à ladite chambre sont associés, en outre, des moyens d'étanchéité (156, 418, 428) pouvant être mis dans un état inactif pour permettre au gaz non réactif quittant la chambre d'usinage par ladite ouverture de s'échapper librement, et pouvant être mis dans un état actif pour mettre de façon étanche ladite ouverture de la chambre d'usinage (108) en communication d'écoulement de fluide avec lesdits moyens d'entrée (372) du manifold (240) de façon à contraindre le gaz non réactif et les particules de matière entraînées dans celui-ci à s'écouler de la chambre d'usinage uniquement dans ledit manifold.

2. Appareil selon la revendication 1, caractérisé en ce que ledit manifold (240) possède, formés à l'intérieur de celui-ci, des moyens de sortie (390, 392), et des cavités de transit (374) interconnectant lesdits moyens d'entrée (372) et lesdits moyens de sortie (390, 392).

3. Appareil selon la revendication 1 ou 2, caractérisé en ce que ledit manifold (240) se compose de parties séparées (368, 370) réunies l'une à l'autre de façon séparable, et qui, lorsqu'elles sont séparées l'une de l'autre, donnent accès à l'intérieur du manifold pour faciliter le nettoyage.

4. Appareil selon la revendication 1, 2 ou 3, caractérisé en ce que lesdits moyens de collecte et d'enlèvement des particules comportent un système (256) d'enlèvement des particules connecté auxdits moyens de sortie (390, 392) du manifold pour recevoir de celui-ci le gaz non réactif transportant des particules de matière, ledit système (256) d'enlèvement des particules comportant des moyens (316) pour séparer les particules de matière du gaz non réactif.

5. Appareil selon la revendication 4, caractérisé en ce que lesdits moyens (316) pour séparer les particules de matière du gaz non réactif comportent un dépoussiéreur par voie humide.

6. Appareil selon la revendication 4 ou 5, caractérisé en ce que ledit système (256) d'enlèvement des particules est connecté auxdits moyens de sortie (390, 392) du manifold par l'intermédiaire de moyens d'accouplement séparables (301).

7. Appareil selon la revendication 6, caractérisé en ce que lesdits moyens de sortie (390, 392) comportent des moyens formant douille de raccordement (390), et en ce que lesdits moyens d'accouplement séparables (301) comportent des moyens formant conduit, pouvant être engagés dans lesdits moyens formant douille de raccordement ou en être retirés.

8. Appareil selon l'une quelconque des revendications précédentes, caractérisé en ce que ledit manifold (240) est amovible et est associé à des moyens de verrouillage (376) pouvant être mis dans des positions de verrouillage et de déverrouillage pour verrouiller le manifold dans sa position de fonctionnement et pour le déverrouiller en vue de son retrait, respectivement.

9. Appareil selon la revendication 6 ou 7, caractérisé par un élément mobile (338) supportant lesdits moyens d'accouplement séparables (301) et mobile entre une première position et une deuxième position pour accoupler aux moyens de sortie (390, 392) du manifold (240) le système (256) d'enlèvement des particules, et pour l'en désaccoupler, ledit manifold étant amovible et étant associé à des moyens de verrouillage (376) pouvant être mis dans des positions de verrouillage et de déverrouillage pour verrouiller le manifold dans une position de fonctionnement et pour le déverrouiller en vue de son retrait, respectivement, ledit élément mobile (338), et lesdits moyens de verrouillage (376) étant associés de telle sorte que le déplacement de l'élément mobile (338) vers lesdites première et deuxième positions de celui-ci produise un déplacement simultané des moyens de verrouillage (376) vers lesdites positions de verrouillage et de déverrouillage, respectivement.

10. Appareil selon l'une quelconque des revendications précédentes, caractérisé en ce que lesdits moyens 'étanchéité (156, 418, 428) comportent une plaque d'étanchéité (156) recouvrant la chambre d'usinage (108) et ladite ouverture de celle-ci, dans une disposition mutuelle de faible espacement, un élément d'étanchéité (428) supporté par la chambre d'usinage et sétendant autour de ladite ouverture de celle-ci dans une disposition sous-jacente par rapport à ladite plaque d'étanchéité (156), et des moyens (418) d'établissement de l'étanchéité pouvant fonctionner de façon à faire venir ledit élément détanchéité (428) en contact étanche avec la face inférieure de ladite plaque d'étanchéité (156).

11. Appareil selon la revendication 10, caractérisé en ce que ladite chambre d'usinage (108) est mobile par rapport à ladite plaque d'étanchéité (156) dans un plan parallèle à ladite face inférieure de celle-ci, ladite face inférieure étant polie.

12. Appareil selon la revendication 10 ou 11, caractérisé en ce que lesdits moyens (418) d'établissement de l'étanchéité sont un tube gonflable supporté directement en dessous dudit élément d'étanchéité (428) et adapté, lorsqu'il est gonflé, pour faire établir par ce dernier ledit contact étanche.

13. Appareil selon la revendication 10, 11 ou 12, caractérisé en ce que dans ladite plaque d'étanchéité (156) est formée une ouverture (364) adaptée pour être traversée par le faisceau d'usinage, ledit manifold (240) étant disposé dans ladite ouverture de la plaque d'étanchéité et étant de configuration globalement annulaire de façon à définir une ouverture (367) qui s'étende à traverse le manifold substantiellement en alignement coaxial avec l'ouverture (364) de la plaque d'étanchéité.

0 168 673

Fig-1

0 168 673

Fig-2A

Fig-2B

Fig-2C

2

Fig-3

Fig-4

0 168 673

Fig-5

Fig-6

Fig-7

Fig-8

Fig-9

0 168 673

Fig-10

Fig-11

Fig-12

Fig-13

Fig-14

Fig-15

9